## Europäisches Patentamt
## European Patent Office
## Office européen des brevets

(19)

(11) Veröffentlichungsnummer: **0 202 567**
**B1**

(12) **EUROPÄISCHE PATENTSCHRIFT**

(45) Veröffentlichungstag der Patentschrift: **04.07.90**

(51) Int. Cl.⁵: **C 01 G 49/08, C 09 C 1/24**

(21) Anmeldenummer: **86106402.0**

(22) Anmeldetag: **12.05.86**

(54) Verfahren zur Herstellung von Schwarzpigmenten auf Eisenbasis.

(30) Priorität: **21.05.85 DE 3518093**

(43) Veröffentlichungstag der Anmeldung:
**26.11.86 Patentblatt 86/48**

(45) Bekanntmachung des Hinweises auf die Patenterteilung:
**04.07.90 Patentblatt 90/27**

(84) Benannte Vertragsstaaten:
**DE GB IT**

(56) Entgegenhaltungen:
**FR-A-1 372 995**
**FR-A-2 261 980**
**FR-A-2 308 669**
**US-A-2 133 267**

(73) Patentinhaber: **BAYER AG**
**D-5090 Leverkusen 1 Bayerwerk (DE)**

(72) Erfinder: **Brunn, Horst, Dr.**
**Kemperallee 18**
**D-4005 Meerbusch (DE)**
Erfinder: **Schulten, Gerd-Hermann**
**Bromberger Strasse 26**
**D-4100 Duisburg 46 (DE)**
Erfinder: **Fuhr, Werner, Dr.**
**Hoeninghausstrasse 40**
**D-4150 Krefeld (DE)**

**Beschreibung**

Die vorliegende Erfindung betrifft ein Verfahren zur Herstellung von Schwarzpigmenten auf Eisenbasis mit Magnetitstruktur aus eisenionenhaltigem sauren Abwasser mit Metallsalzgehalten von weniger als 100 g/l, bei dem man in einer ersten Stufe die Ausfällung der Metallionen mit basischen Substanzen unter Oxidationsbedingungen zum Rohschlamm bei Umgebungstemperatur so vornimmt, daß ein pH-Wert von mehr als 8,0 und ein Eisen(III)/Eisen(II)-Verhältnis von 1,0 bis 2,4 vorliegt.

Schwarzpigmente sind Eisen(II, III)-Oxide, mit Magnetitstruktur. Daneben existieren noch eisenreiche Mischoxide, wie z.B. dem Bixbyit, einem maganhaltigen Eisen(III)-Oxid, die ebenfalls sehr blaustichige Schwarzpigmente ergeben. Eisenoxidschwarzpigmente werden im allgemeinen durch Oxidation von metallischem und/oder zweiwertigem Eisem (Fällverfahren, Anilinverfahren) oder durch Umsetzung von dreiwertigen Eisenverbindungen, gegebenenfalls unter Reduktionsbedingungen (Calcinations-bzw. Thermolyseverfahren), hergestellt.

Die übliche Herstellung von Eisen(II, III)-Oxiden in Magnetitstruktur aus wäßrigem Milieu, ist die Oxidation von Eisen(II)-Salzen bei erhöhten Temperaturen (Masao Kiyama, Bull. chem. Soz. Japan, Vol. 47 (7), Seite 1646 bis 1650 (1974)). Bei dem Verfahren geht man im Regelfall von konzentrierten Eisensalzlösungen aus, wie sie z.B. als Abfallaugen in Beizereien oder als titanhaltiges Nebenprodukt bei der Herstellung von Titandioxid nach dem sogenannten Sulfatverfahren anfallen. Die Rohstoffe sind demnach vorwiegend Eisen(II)-Sulfate und/oder Chloride mit Konzentrationen im Regelfall von 150 bis 250 g Salz/l im Falle vom Eisen(II)-Sulfat und 200 bis 400 g Salz/l im Falle von Eisen(II)-Chlorid.

Saure Abwässer im Sinne dieser Erfindung sind eisenhaltige Wässer mit Metallsalzgehalten von kleiner als 100 g/l, vorzugsweise kleiner als 25 g/l, wie sie z.B. bei der Herstellung von Eisenoxidpigmenten über die Waschfiltrate anfallen. Auch Wasser aus Kläranlagen, das in der dritten Stufe zur Klärung und Reinigung von Schwermetall und Phosphationen einer Nachfällung mit Adsorption an Eisenoxidhydroxid unterworfen werden muß, ist als Ausgangsmaterial gemäß der Erfindung geeignet. Gemeinsam ist allen Abwässern, daß ihre Wassermenge, bezogen auf die abzutrennenden Eisenanteile, so groß ist, daß eine wirtschaftliche Herstellung von Eisenoxid in Pigmentqualität über das Fällverfahren unter Temperaturerhöhung der Salzlösung von größer 50°C nicht möglich ist. Üblicherweise werden solche Abwässer bei Umwelttemperatur unter Oxidationsbedingungen neutralisiert (evtl. unter Rückführung von Kontaktschlamm), um sämtliche Eisenionen einschließlich der Fremdionen abzusondern. Solche Ausfällungen sind allerdings wegen ihrer Inhomogenität—es können zwischen Eisenoxid, Eisenoxidhydroxid und reinem Eisenhydroxid alle Phasen vorliegen—als Ausgangsmaterial für Ferrite und Pigmente nicht geeignet.

Die Aufgabe der vorliegenden Erfindung ist es daher, ein Verfahren zur Verfügung zu stellen, welches in wirtschaftlicher Weise die Herstellung hochwertiger Eisenoxidpigmente aus deren Abwässern erlaubt.

Es wurde nun ein solches Verfahren gefunden. Gegenstand dieser Erfindung ist daher ein Verfahren zur Herstellung von Schwarzpigmenten auf Eisenbasis mit Magnetitstruktur aus eisenionenhaltigem sauren Abwasser mit Metallsalzgehalten von weniger als 100 g/l, bei dem man in einer ersten Stufe die Ausfällung der Metallionen mit basischen Substanzen unter Oxidationsbedingungen zum Roschlamm bei Umgebungstemperatur zu vornimmt, daß ein pH-Wert von mehr als 8,0 und ein Eisen(III)/Eisen(II)-Verhältnis von 1,0 bis 2,4 vorliegt, wobei in einer zweiten Stufe der Rohschlamm aufkonzentriert, mit sauren Substanzen auf pH-Werte von 5,0 bis 8,0 gestellt und bei Temperaturen oberhalb 70°C einem Reifungsprozeß unterworfen wird.

Dabei wird das Abwasser bei Umgebungstemperatur mit Alkalien unter Oxidationsbedingungen und Rückführung von Kontaktschlamm oder bei Start der Reaktion durch Vorlage von $Fe_3O_4$-Keimen so behandelt, daß ein pH-Wert von größer 8,0 und ein Eisen(III)/Eisen(II)-Verhältnis von 1,0 bis 2,4 vorliegt.

Vorzugsweise wird die Ausfällung zum Rohschlamm so vorgenommen, daß darin ein $Fe^{3+}/Fe^{2+}$-Verhältnis von 1,5 bis 2,4 vorliegt.

Besonders elegant wird dabei falls nötig die Einstellung des $Fe^{3+}/Fe^{2+}$-Verhältnisses durch Luftoxidation oder durch einen Zusatz von $Fe^{2+}$-Salzen reguliert. Um das Verfahren wirtschaftlich zu gestalten, wird der Rohschlamm auf einen Feststoffgehalt von 200 bis 1200 g/l aufkonzentriert.

Die pH-Wert-Einstellung des Rohschlammes erfolgt erfindungsgemäß durch Zugabe von Schwefelsäure oder saurem Abwasser. Vorteilhafterweise wird dabei die pH-Wert-Einstellung auf einen pH-Wert zwischen 6,5 und 7,5 vorgenommen. Die Reifung des Rohschlammes erfolgt erfindungsgemäß bei Temperaturen zwischen 70 und 100°C. Besonders bevorzugt ist bei dieser Verfahrensweise die pH-Wert-Einstellung erst bei der erhöhten Temperatur vorzunehmen.

Ebenso vorteilhaft ist aber auch die Verfahrensvariante, gemäß der der pH-Wert regulierte Rohschlamm einem Reifungsprozeß bei Temperaturen oberhalb 100°C unter Autoklavenbedingungen unterzogen wird.

Abschließend wird filtriert und gewaschen und je nach Vertriebsform entweder der Filterkuchen verflüssigt oder getrocknet und gemahlen. Durch diese Aneinanderreihung von Maßnahmen lassen sich überraschend Abwasseraufbereitung und Schwarzpigmentherstellung kombinieren, so, daß sie sowohl vom ökologischen als auch vom ökonomischen Standpunkt zu guten Ergebnissen führen.

Erfindungsgemäß werden saure Abwässer eingesetzt, wobei die Eisenionen den Hauptbestandteil der Metallsalzfracht darstellen. Dabei ist es für das Verfahren unerheblich, ob die Eisenionen selbst die Verunreinigungen sind oder ob sie, wie z.B. als Absorber in Kläranlagen benutzt, dem Abwasser erst zugesetzt werden. Wesentlich für das erfindungsgemäße Verfahren ist, daß die Eisenkonzentration im gebildeten Niederschlag wenigstens 80%, besser 90%, des Gesamtmetallgehaltes ausmacht. Der Fremdmetallanteil besteht z.B. bei den Pigmentherstellern überwiegend aus zweiwertigen 3-d-Metallen, wie z.B. Mangan, Zink etc. Aber auch andere Metallionen, wie z.B. die Metalle Nickel, Cobalt, Chrom aus dritten Klärstufen können den Fremdanteil des sauren Abwassers darstellen. Der Anteil an dreiwertigen Eisenionen sollte 70% des Gesamteisens nicht überschreiten, bzw. der zweiwertigen Anteil sollte 30% nicht unterschreiten. Andernfalls kann dem Abwasser so viel an Eisen(II)-Salzen, wie Eisensulfat oder Eisen(II)-Chlorid zudosiert werden, daß obiges Verhältnise von mindestens 7:3 sich einstellt. Dabei sollte die Gesamtkonzentration an auszufällenden Salzen unter 100 g Salz/l, vorzugsweise unter 25 g Salz/l, liegen.

Das metallsalzsaure Abwasser mit einem Eisen(III)/Eisen(II)-Verhältnis von kleiner 2,4 und einem Eisenanteil von wenigstens 80%, bezogen auf den Gesamtmetallgehalt, wird sodann bei Umgebungstemperatur mit Alkalien, bevorzugt Natronlauge, unter Rückführung von Kontaktschlamm bzw. bei Start der Reaktion unter Vorlage von $Fe_3O_4$-Keimen auf einen pH-Wert von größer 8,0, vorzugsweise größer 8,5, gestellt. Liegt das Eisen(III)/Eisen(II)-Verhältnis unter 1,5, so wird oxidierend gefällt. Als Oxidationsmittel wird vorzugsweise Luft eingesetzt. Die Oxidation kann aber auch mit Peroxiden oder Dichromat- bzw. Permangantablaugen erfolgen. Das auf den Kontaktschlamm aufgefällte fremdmetallhaltige Eisenoxid/Hydroxidgemisch wird vorteilhafterweise über Schwerkrafteindickung von dem Abwasser befreit. Aber auch andere Fest-Flüssig-Trennaggregate wie Filter, Zentrifugen oder Magnetscheider sind einsetzbar. Ein Teil des abgeschiedenen Feststoffes wird, wie oben erwähnt, stets als Kontaktschlamm im Kreislauf gefahren. Die Umlaufrate an Feststoff wird so bemessen, daß wenigstens das 10fache, vorteilhafterweise das 20- bis 50fache, der auszufällenden Metallionen berechnet als $Me(OH)_2$ im Kreislauf gefahren wird. Bei Start der Reaktion wird die Keimmasse so lange im Kreislauf bewegt, bis deren Teilchen eine spezifische Oberfläche von kleiner 40 m²/g, vorteilhafter kleiner 20 m²/g, erreicht haben. Die sodann ausgeschleuste Feststoffsuspension mit, in Abhängigkeit vom Trennaggregat, Feststoffgehalten größer 200 g/l, besteht aus Teilchen, deren spezifische Oberfläche sich je nach Umlaufrate und Verweilzeit mit 5—40 m²/g im Bereich der Pigmente bewegt. Von der Koloristik her sind sie allerdings eher als farbschwache, grünstichige (je nach FeOOH-Anteil) Braunpigmente einzuordnen.

Aus dem angefallenen Rohschlamm erhält man überraschenderweise ein farbstarkes, blaustichiges Schwarzpigment, wenn man die aufkonzentrierte Feststoffsuspension mit Säuren und/oder sauer reagierenden Salzen auf einen pH-Wert von 5 bis 8,0, vorzugsweise 6,5 bis 7,5, einstellt und vergleichsweise kurz bei Temperaturen größer 70°C, vorzugsweise 80—100°C, rührt. Als Säuren sind die bekannten Mineralsäuren wie HCl und $H_2SO_4$ einsetzbar. Eine bevorzugte Ausführung des erfindungsgemäßen Verfahrens ist jedoch der Einsatz von Metallsalzen, wie Eisen- und Aluminiumsalzen etc., wobei besonders bevorzugt der Einsatz des Ausgangsmaterials des sauren, metallsalzhaltigen Abwassers selbst ist. Bei der thermischen Behandlung der Suspension verhält sich die Verweilzeit umgekehrt proportional zur angestrebten Temperatur, wobei 3 h bei 70°C in etwa 15 min bei 100°C entsprechen. Größere Abweichungen vom idealen Eisen(III)/Eisen(II)-Verhältnis in der Suspension können dabei entweder durch Oxidation (vorzugsweise bei Werten von $Fe^{3+}/Fe^{2+}$ kleiner 1,8) oder durch Zugabe von Eisen(II)-Salzen und Alkalien unter Konstanthaltung des pH-Wertes zwischen 6,5 und 7,5 (vorzugsweise bei $Fe^{3+}/Fe^{2+}$-Werten größer 2,0) ausgeglichen werden.

Alternativ zur Temperung des Schlammes im definierten pH-Wertbereich läßt sich eine Behandlung im Autoklaven durchführen. Dabei können gegebenenfalls unter Zuhilfenahme von Verflüssigern auch Feststoffgehalte, wie sie bei Filterkuchen mit 1000 bis 1200 g Feststoff/l anfallen, in einem Konti-Rohrreaktor verarbeitet werden.

Die Aufarbeitung der Suspension erfolgt durch Filtration mit gründlichem Waschen. Soll das Schwarzpigment in Slurry-Form vertrieben werden, so ist der abschließende Schritt die Verflüssigung des Filterkuchens unter Zuhilfenahme von marktgängigen Verflüssigern. Zur Herstellung von Pulverware wird der Filterkuchen getrocknet und gemahlen.

Das erfindungsgemäß erhaltene Schwarzpigment in Magnetitstruktur hat eine BET-Oberfläche zwischen 3 und 20 m²/g, vorzugsweise 5 und 15 m²/g. Entscheidend für die Größe der BET-Oberfläche am Endprodukt ist der des bei Raumtemperatur angefallenen Rohschlammes, der bekanntlich über Verweilzeit bzw. Aufwachsrate bestimmt werden kann. Die thermische Behandlung in der zweiten Stufe kann jedoch das Rohmaterial bis zu 50% in der spezifischen Oberfläche absenken. So reduziert sich die BET-Oberfläche, ausgehend von Rohschlämmen unter 10 m²/g, bei der thermischen Nachbehandlung nur geringfügig während Ausgangsmaterialien von 40 m²/g auf 20 m²/g durch die Temperung bei über 70°C zurückgehen. Bei den erfindungsgemäß hergestellten Pigmenten mit Oberflächen größer 12 m²/g und die in Pulverform vertrieben werden sollen, kann die Thermostabilisierung gemäß Stand der Technik entweder über die Nachbehandlung mit oberflächenschützenden Substanzen (z.B. N-haltige Heterocyclen) oder aber über die Erniedrigung des FeO-Gehaltes vorgenommen werden. Im letzteren Fall ist die Möglichkeit gegeben, das Eisen(III)/Eisen(II)-Verhältnis durch verstärkte Oxidation mit z.B. Luft anzuheben.

Die erfindungsgemäßen hergestellten Pigmente reihen sich bei der objektiven Farbmessung und Auswertung im CIELAB-System (DIN 6174) zwanglos in die Palette der marktgängigen Eisenoxidschwarzpigmente ein. Das Einsatzgebiet solcher Pigmente liegt hauptsächlich in der Pigmentierung von Lacken, Kunststoffen und Betonteilen.

Anhand folgender Beispiele soll das erfindungsgemäße Verfahren näher erläutert werden, ohne daß darin eine Einengung zu sehen ist.

Beispiel 1

25—30°C warmes Abwasser aus der Eisenoxidproduktion mit einem mittleren Metallgehalt von 1,5 g/l, wobei die Konzentration um den Faktor 10 nach oben und unten schwanken kann, wird mit einem mittleren Volumenstrom von 120 l/h (Schwankungsbreite 40—180 l/h) einem Fällgefäß zugeführt. Der Metallgehalt setzt sich wie folgt zusammen:

Ca. 90% liegt als Salz (Chlorid/Sulfat) vor (der Fe-Anteil seinerseits liegt über 90%).

Ca. 10% gelangen über mitgerissene Pigmentanteile in das Fällgefäß. Darüber hinaus enthält der Abwasserstrom infolge Hydrolyse bei pH-Werten größer 4,0 ausgeflocktes Eisen(III)-hydroxid.

Bei Reaktionsstart wird als Kontaktschlamm $Fe_3O_4$-Pigment (BET-Oberfläche 16 m²/g) mit einem Massenstrom von ca. 5 kg/h (entsprechend einer 20fachen Keimvorlage) vorgelegt, und sobald die anschließende Eindickung im Eindicker die Konzentration von 200 g/l (bei einem max. Rücklaufstrom von 25 l/h) überschreitet, wird das System im Kreis gefahren. Mit der Zeit steigert sich die Rücklaufkonzentration auf Werte zwischen 300 und 500 g/l. Die Ausfällung des zugeführten löslichen Metallanteils erfolgt mit Natronlauge (30 Gew.-%) bei einem pH-Wert von 8,5. Die Oxidation mit Luft wird über einen Begasungsrührer vorgenommen. Die in Abhängigkeit vom Aufwachsfaktor, der Temperatur und der Luftmenge erzielten Rohschlammdaten sind der Tabelle 1 zu entnehmen.

Die angeführten Farbdaten sind im Weißverschnitt (Abmischung des getrockneten Schlamms mit einem handelsüblichen Titandioxidweißpigment im Gewichtsverhältnis 1:5) nach DIN 53 236 gemessen und die nach DIN 6174 umgerechneten CIELAB-C/2grd-Farbwerte ergeben im Vergleich zum Handelsprodukt Bayferrox 318 im Alkydal F 48-Lack (beides Markenprodukte der Bayer AG) farbschwache, äußerst braunstichige Pigmente (Anmerkung: positive Δ a*- und Δ x*- Werte bedeuten Braunstich, negative Werte dementsprechend Blaustich).

Beispiel 2

Die nach Beispiel 1 vorliegenden Rohschlämme A-C mit einem Feststoffgehalt von ca. 400 g/l werden im Verlauf von 30 min auf Temperaturen über 70°C aufgeheizt. Mit einer Eisensulfatlösung (220 g/l) wird der in Tabelle 2 angegebene pH-Wert eingestellt. Die unter Rühren bei vorgegebener Temperatur einzuhaltenden Verweilzeiten sind ebenfalls in Tabelle 2 angegeben.

Im Regelfall wird nach dem Filtrations- und Waschprozeß der Filterkuchen sprühgetrocknet und sodann in einer Pendelmühle gemahlen. Lediglich das Pigment Nr. 3 erfährt eine andere Trocknungsbehandlung. Um der mit zunehmender BET-Oberfläche steigenden Oxidationsempfindlichkeit vorzubeugen, wird hier das Pigment bei erhöhter Temperatur (100—120°C) getrocknet und somit über eine Erniedrigung des FeO-Gehaltes auf 24—29 Gew.-%, bezogen auf Gesamteisenoxid passiviert.

Die Farbauswertung der nach Beispiel 2 erhaltenen Schwarzpigmente erfolgte nach der in Beispiel 1 angegebenen Rezeptur. Sie erreichen demnach problemlos das Farbniveau der Vergleichspigmente.

Beispiel 3

Es wird nach Beispiel 2, Pigment Nr. 5, mit der zusätzlichen Maßgabe einer Luftoxidation verfahren. Über die bei 90°C vorgenommene Begasung wird das $Fe^{3+}/Fe^{2+}$-Verhältnis auf 1,9 angehoben. Nachdem, unter Zusatz von 0,5 Gew.-% Aminotriazol, Mahlen in einer Pendelmühle erhält man ein oxidationsstabiles Schwarzpigment mit einer spezifischen Oberfläche nach BET von 13,8 m²/g. Farblich entspricht das Produkt Bayferrox® 320 (Δ a*=0,0: Δ b*=−0,1:% $F_{rel}$=103) Handelsprodukt der Bayer AG.

Beispiel 4

Der Rohschlamm Nr. B, hergestellt nach Beispiel 1, wird mit einer Feststoffkonzentration von 400 g/l mit Schwefelsäure (20 Gew.-%) auf einen pH-Wert von 7,3 gestellt. Sodann wird die Suspension in einem Autoklaven 10 min lang bei 160°C getempert. Nach der Aufarbeitung (Filtrieren, Waschen Trocknen, Mahlen) erhält man ein im Vergleich zu Bayferrox® 318 M—ein Handelsprodukt der Bayer AG—um 15% farbstärkeres Schwarzpigment (Δ a*=−0,1; Δ b*=0), das eine spezifische Oberfläche nach BET von 10,4 m² aufweist.

TABELLE 1

| Rohschlamm | T °C | Reaktions-bedingungen Aufwachs-faktor | Luftmenge m³/h | BET m²/g | Rohschlamm-Kenngrößen $Fe^{3+}/Fe^{2+}$ | $\Delta a*$ | Farbdaten[1] $\Delta b*$ | % $F_{rel.}$ |
|---|---|---|---|---|---|---|---|---|
| A | 30 | 20 | 3 | 20 | 1,78 | +0,4 | +5,8 | 70 |
| B | 25 | 15 | 3 | 36 | 1,67 | +0,3 | +5,9 | 76 |
| C | 30 | 30 | 3 | 12 | 1,91 | 0 | +4,6 | 56 |
| D | 30 | 20 | 1 | 28 | 1,36 | +0,4 | +6,4 | 68 |

[1])Bezug Bayferrox® 318

TABELLE 2

| Pigment Nr. | Rohschlamm | T (°C) | t (h) | pH | BET (m²/g) | $\Delta a*$ | Farbdaten $\Delta b*$ | % $F_{rel.}$ | Bezug Bayferrox® |
|---|---|---|---|---|---|---|---|---|---|
| 1 | A | 70 | 3,0 | 7,0 | 12,5 | −0,2 | 0 | 100 | 320 |
| 2 | A | 90 | 1,0 | 6,5 | 10,8 | −0,1 | −0,2 | 96 | 320 |
| 3 | B | 95 | 0,5 | 6,0 | 15,3 | 0,1 | 0,5 | 102 | 320 |
| 4 | C | 80 | 1,5 | 7,8 | 9,8 | 0,1 | 0,2 | 106 | 318 |
| 5 | C | 90 | 1,0 | 7,0 | 9,2 | 0 | −0,2 | 100 | 318 |

**Patentansprüche**

1. Verfahren zur Herstellung von Schwarzpigmenten auf Eisenbasis mit Magnetitstruktur aus eisenionenhaltigem sauren Abwasser mit Metallsalzgehalten von weniger als 100 g/l, bei dem man in einer ersten Stufe die Ausfällung der Metallionen mit basischen Substanzen unter Oxidationsbedingungen zum Rohschlamm bei Umgebungstemperatur zo vornimmt, daß ein pH-Wert von mehr als 8,0 und ein Eisen(III)/Eisen(II)-Verhältnis von 1,0 bis 2,4 vorliegt, dadurch gekennzeichnet, daß in einer zweiten Stufe der Rohschlamm aufkonzentriert, mit sauren Substanzen auf pH-Wert von 5,0 bis 8,0 gestellt und bei Temperaturen oberhalb 70°C einem Reigungsprozeß unterworfen wird.

2. Verfahren gemäß Anspruch 1, dadurch gekennzeichnet, daß die Ausfällung zum Rohschlamm so vorgenommen wird, daß darin ein $Fe^{3+}/Fe^{2+}$-Verhältnis von 1,5 bis 2,4 vorliegt.

3. Verfahren gemäß Anspruch 2, dadurch gekennzeichnet, daß die Einstellung des $Fe^{3+}/Fe^{2+}$-Verhältnisses durch Luftoxidation oder durch einen Zusatz von $Fe^{2+}$-Salzen reguliert wird.

4. Verfahren gemäß einem oder mehrerer der Ansprüche 1 bis 3, dadurch gekennzeichnet, daß der Rohschlamm auf einen Feststoffgehalt von 200 bis 1200 g/l aufkonzentriert wird.

5. Verfahren gemäß einem oder mehrerer der Ansprüche 1 bis 4, dadurch gekennzeichnet, daß die pH-Wert-Einstellung durch Zusatz von Schwefelsäure vorgenommen wird.

6. Verfahren gemäß einem oder mehrerer der Ansprüche 1 bis 4, dadurch gekennzeichnet, daß die pH-Wert-Einstellung durch Zusatz von saurem Abwasser vorgenommen wird.

7. Verfahren gemäß einem der Ansprüche 5 oder 6, dadurch gekennzeichnet, daß die pH-Wert-Einstellung des Rohschlammes auf pH-Werte zwischen 6,5 und 7,5 erfolgt.

8. Verfahren gemäß einem oder mehrerer der Ansprüche 1 bis 7, dadurch gekennzeichnet, daß der Rohschlamm vor der pH-Wert-Einstellung auf Temperaturen über 70°C gebracht wird.

9. Verfahren gemäß einem oder mehrerer der Ansprüche 1 bis 8, dadurch gekennzeichnet, daß der Rohschlamm einem Reifungsprozeß bei Temperaturen zwischen 70 und 100°C unterzogen wird.

10. Verfahren gemäß einem oder mehrerer der Ansprüche 1 bis 8, dadurch gekennzeichnet, daß der Rohschlamm einem Reifungsprozeß bei Temperaturen oberhalb 100°C unter Autoklavenbedingungen unterzogen wird.

**Revendications**

1. Procédé de production de pigments noirs à base de fer à structure de magnétite à partir d'une eau résiduaire acide contenant des ions fer, ayant des teneurs en sels métalliques de moins de 100 g/l, dans lequel on effectue dans une première étape la précipitation des ions métalliques avec des substances basiques dans des conditions oxydantes pour obtenir une boue brute à la température ambiante, de telle manière qu'il y ait une valeur de pH de plus de 8,0 et un rapport fer(III)/fer(II) de 1,0 à 2,4, caractérisé en ce que la boue brute est concentrée dans une seconde étape, son pH est ajusté à des valeurs de 5,0 à 8,0 avec des substances acides et elle est soumise à un processus de maturation à des températures au-dessus de 70°C.

2. Procédé suivant la revendication 1, caractérisé en ce que la précipitation pour former la boue brute est effectuée de manière qu'il y ait dans la boue un rapport $Fe^{3+}/Fe^{2+}$ de 1,5 à 2,4.

3. Procédé suivant la revendication 2, caractérisé en ce que le rapport $Fe^{3+}/Fe^{2+}$ établi est réglé par oxydation par l'air ou par une addition de sels de $Fe^{2+}$.

4. Procédé suivant une ou plusieurs des revendications 1 à 3, caractérisé en ce que la boue brute est concentrée à une teneur en matière solide de 200 à 1200 g/l.

5. Procédé suivant une ou plusieurs des revendications 1 à 4, caractérisé en ce que le réglage de la valeur de pH est effectué par l'addition d'acide sulfurique.

6. Procédé suivant une ou plusieurs des revendications 1 à 4, caractérisé en ce que le réglage de la valeur de pH est effecuté par l'addition d'eau résiduaire acide.

7. Procédé suivant l'une des revendications 5 ou 6, caractérisé en ce que le réglage de la valeur de pH de la boue brute est effectué à des valeurs comprises entre 6,5 et 7,5.

8. Procédé suivant une ou plusieurs des revendications 1 à 7, caractérisé en ce que la boue brute est portée à des températures au-dessus de 70°C avant le réglage de la valeur de pH.

9. Procédé suivant une ou plusieurs des revendications 1 à 8, caractérisé en ce que la boue brute est soumise à un processus de maturation à des températures comprises entre 70 et 100°C.

10. Procédé suivant une ou plusieurs des revendications 1 à 8, caractérisé en ce que la boue brute est soumise à un processus de maturation à des températures supérieures à 100°C dans des conditions de traitement en autoclave.

**Claims**

1. A process for the production of iron-based black pigments of magnetite structure from acidic wastewater containing iron ions and having metal salt contents of less than 100 g/l, in which, in a first stage, the metal ions are precipitated with basic substances under oxidation conditions at ambient temperature to form the crude sludge in such a way that a pH value above 8.0 and an iron(III)/iron(II) ratio of 1.0 to 2.4 are present, characterized in that, in the second stage, the red sludge is concentrated, adjusted with acidic substances to pH values of 5.0 to 8.0 and subjected to a purification process at temperatures above 70°C.

2. A process as claimed in claim 1, characterized in that precipitation to form the crude sludge is carried out in such a way that an $Fe^{3+}/Fe^{2+}$ ratio of 1.5 to 2.4 is present.

3. A process as claimed in claim 2, characterized in that adjustment of the $Fe^{3+}/Fe^{2+}$ ratio is regulated by oxidation with air by an addition of $Fe^{2+}$ salts.

4. A process as claimed in one or more of claims 1 to 3, characterized in that the crude sludge is concentrated to a solid content of 200 to 1200 g/l.

5. A process as claimed in one or more of claims 1 to 4, characterized in that the pH value is adjusted by addition of sulfuric acid.

6. A process as claimed in one or more of claims 1 to 4, characterized in that the pH value is adjusted by addition of acidic wastewater.

7. A process as claimed in claim 5 or 6, characterized in that the crude sludge is adjusted to a pH value of 6.5 to 7.5.

8. A process as claimed in one or more of claims 1 to 7, characterized in that the crude sludge is heated to temperatures above 70°C for pH adjustment.

9. A process as claimed in one or more of claims 1 to 8, characterized in that the crude sludge is adjusted to a ripening process at temperatures of 70 to 100°C.

10. A process as claimed in one or more of claims 1 to 8, characterized in that the crude sludge is subjected to a ripening process at temperatures above 100°C under autoclave conditions.